# FASCICULE DE BREVET EUROPEEN

(11) **EP 0 802 599 B1**
(45) Date de publication et mention de la délivrance du brevet: **17.10.2001**
(21) Numéro de dépôt: 97400864.1
(22) Date de dépôt: 17.04.1997
(51) Int. Cl.: H02G 3/18, H02G 3/08, H02G 3/14

(54) **Boîte de sol, notamment pour appareillage électrique**
Bodendose für elektrische Geräte
Floor outlet for electrical apparatus

(30) Priorité: 19.04.1996 FR 9604941
(43) Date de publication de la demande: 22.10.1997
(73) Titulaire: ARNOULD Fabrique d'Appareillage Electrique, 38160 Saint-Marcellin (FR)
(72) Inventeur: Poulet, Olivier, 38160 Saint-Marcellin (FR); Trichard, Didier, 38210 Morette (FR)
(74) Mandataire: CABINET BONNET-THIRION

(56) Documents cités:
- US-A- 4 058 358
- US-A- 4 484 021

## Description

La présente invention concerne d'une manière générale les boîtes de sol du type de celles mises en oeuvre pour l'encastrement, d'un quelconque appareillage, et, notamment, d'un quelconque appareillage électrique, tel que, par exemple, un socle de prise de courant, dans un quelconque sol ou dans une quelconque cloison, assimilée à un sol pour plus de simplicité dans ce qui suit.

Une telle boîte de sol comporte, usuellement, un support, qui, destiné à être disposé dans un logement prévu à cet effet dans le sol, comporte, pour la réception de l'appareillage à encastrer dans celui-ci, et, plus précisément, pour la réception du mécanisme de cet appareillage, un évidement, une plaque de façade, communément appelée simplement "façade", qui, destinée à porter sur le sol, pour y former un enjoliveur, s'étend annulairement autour de l'évidement du support, et un couvercle, qui, monté pivotant par une articulation, est apte à fermer cet évidement .

En pratique, le logement destiné à recevoir l'appareillage à encastrer est formé par une boîte d'encastrement implantée dans le sol à la faveur d'une excavation ménagée à cet effet dans celui-ci, et le couvercle est articulé à la plaque de façade.

Quoi qu'il en soit, il est nécessaire de prévoir des moyens d'étanchéité pour protéger l'appareillage concerné, tant lorsque celui-ci est en service que lorsqu'il est en attente.

Il est donc prévu, d'une part, des moyens d'étanchéité, dits ci-après par simple commodité moyens d'étanchéité externes, qui interviennent annulairement autour du support, sous la plaque de façade, en portant soit sur la partie supérieure de la boîte d'encastrement sous-jacente, soit sur le sol lui-même, et, qui, de ce fait, sont actifs en permanence , et, d'autre part, des moyens d'étanchéité, dits ci-après par simple commodité moyens d'étanchéité internes, qui, interviennent annulairement autour de l'évidement du support, sous le couvercle, et qui ne sont donc actifs que lorsque, l'appareillage concerné étant en attente, le couvercle est en position rabattue de fermeture.

Usuellement, à ce jour, ces moyens d'étanchéité externes et internes appartiennent à des joints distincts, au détriment du nombre de pièces différentes nécesaires à la constitution de l'ensemble.

On connaît cependant des documents US-A-4 484 021 et US-A-4 058 358 des boîtes dans lesquelles les moyens d'étanchéité externes et les moyens d'étanchéité internes appartiennent d'un seul tenant à un même joint.

Corrolairement, l'articulation du couvercle est, usuellement, à ce jour, une articulation rigide, matérialisée, par exemple, par un axe métallique formant charnière entre ce couvercle et la plaque de façade.

Il en résulte que tout choc auquel est soumis le couvercle, à la suite par exemple de la chute d'un objet sur lui, se répercute sur cette articulation, et, par elle, sur la plaque de façade, au risque d'un endommagement de l'une ou l'autre des pièces alors en cause.

La présente invention a d'une manière générale pour objet une disposition permettant de minimiser ces inconvénients et conduisant en outre à d'autres avantages.

De manière plus précise, elle a pour objet une boîte de sol telle que revendiquée dans la revendication 1.

Ainsi, une seule et même pièce, à savoir le joint, assure, suivant l'invention, de multiples fonctions, au bénéfice d'une minimisation du nombre de pièces à mettre en oeuvre.

Outre l'étanchéité nécessaire, ce joint assure en effet par lui-même l'articulation du couvercle.

Mais, de surcroît, cette articulation est une articulation élastique, qui désolidarise mécaniquement le couvercle de la plaque de façade, et qui, en absorbant tout choc éventuel sur l'une ou l'autre de ces pièces, permet avantageusement d'éviter la transmission de chocs de l'une à l'autre de celles-ci.

Les caractéristiques et avantages de l'invention ressortiront, d'ailleurs, de la description qui va suivre, à titre d'exemple, en référence aux dessins schématiques annexés sur lesquels :
- la figure 1 est une vue en perspective d'une boîte de sol suivant l'invention, représentée en place sur le sol qu'elle équipe, pour la position rabattue de fermeture de son couvercle ;
- la figure 2 est une vue en perspective analogue à celle de la figure 1, pour la position relevée d'ouverture du couvercle ;
- la figure 3 est une vue en perspective éclatée de la boîte de sol suivant l'invention, suivant une vue de dessous de ses divers constituants ;
- la figure 4 est une vue en perspective d'un de ces constituants, en l'espèce le support, vu de dessus, suivant la flèche IV de la figure 3 ;
- la figure 5 reprend, à échelle supérieure, le détail de la figure 4 repéré par un encart V sur cette figure 4 ;
- la figure 6 est une vue qui, déduite de celle de la figure 5, concerne à la fois le support et le joint mis en oeuvre suivant l'invention ;
- la figure 7 est, à échelle différente, et avec un arrachement local, une vue en plan de ce joint, suivant la flèche VII de la figure 3 ;
- la figure 8 en est une vue transversale en coupe, suivant la ligne VIII-VIII de la figure 7 ;
- les figures 9 et 10 reprennent chacune respectivement , et à échelle supérieure, les détails de la figure 8 repérés par des encarts IX et X sur cette figure 8;

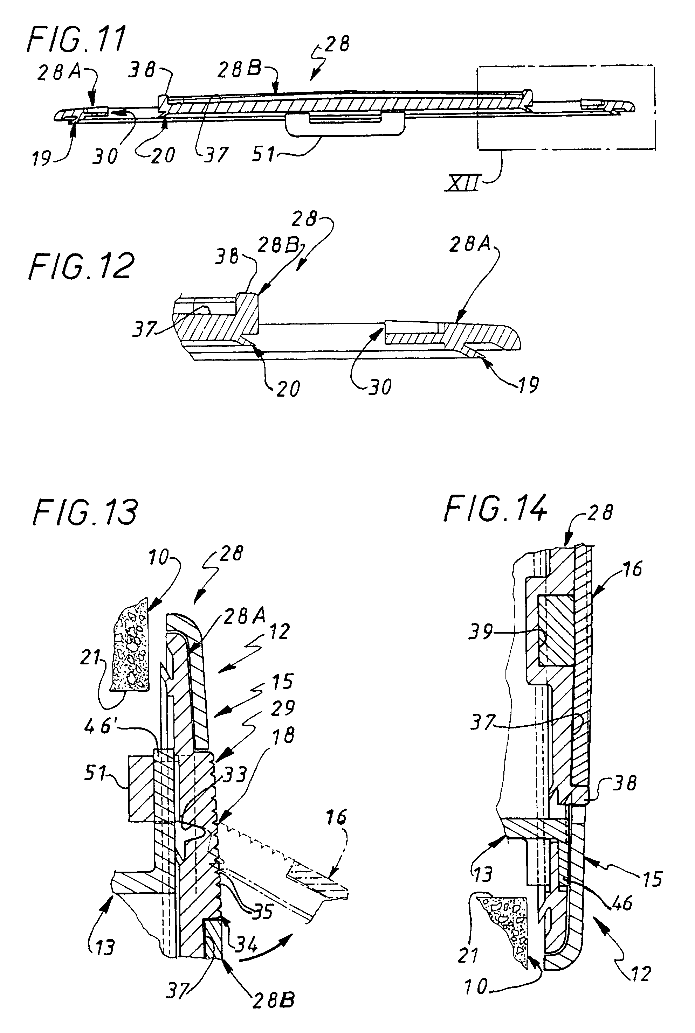

- la figure 11 est une autre vue en coupe transversale du joint mis en oeuvre suivant l'invention, suivant la ligne XI de la figure 7 ;
- la figure 12 reprend à une échelle supérieure, le détail de la figure 11 repéré par un encart XII sur cette figure 11 ;
- les figures 13 et 14 sont des vues en coupe transversales qui, déduites, chacune respectivement, de celles des figures 9 et 10, se rapportent à l'ensemble de la boîte de sol suivant l'invention.

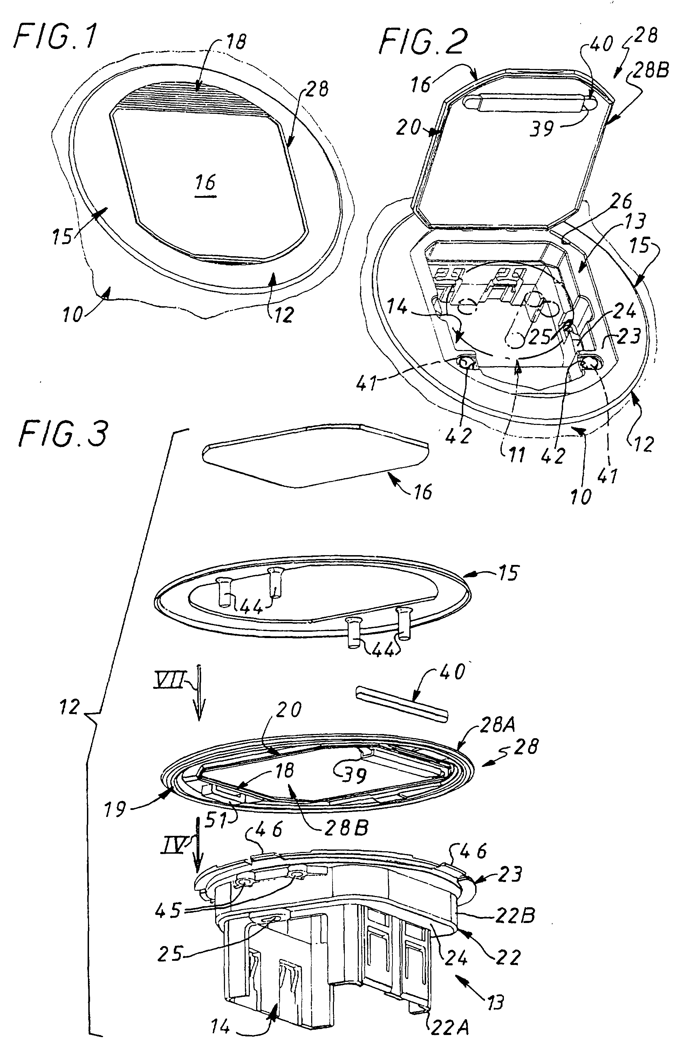

Tel qu'illustré sur ces figures, il s'agit d'encastrer, dans un quelconque sol 10 , un quelconque appareillage 11, et, notamment, un quelconque appareillage électrique, qui, par exemple, et tel que schématisé en traits interrompus par son contour sur la figure 2, est un socle de prise de courant.

Pour ce faire, il est mis en oeuvre une boîte 12, communément dite boîte de sol.

De manière connue en soi, cette boîte de sol 12, comporte, globalement, tel que détaillé à la figure 3, un support 13, qui, destiné à être disposé dans un logement prévu à cet effet dans le sol 10, comporte, lui-même, pour la réception de l'appareillage 11, et, plus précisément, pour la réception du mécanisme de celui-ci, un évidement 14, une plaque de façade 15, qui, destinée à porter sur le sol 10, pour y former un enjoliveur, s'étend annulairement autour de l'évidement 14 du support 13, et un couvercle 16 qui, monté pivotant par une articulation 18, est apte à fermer en surface cet évidement 14, sensiblement à niveau avec la plaque de façade 15, et, donc, sensiblement à niveau avec le sol 10.

Suivant des modalités décrites en détail ultérieurement, parce qu'elles relèvent de l'invention, la boîte de sol 12 comporte en outre, globalement, d'une part, des moyens d'étanchéité 19, dits ici par simple commodité moyens d'étanchéité externes, qui interviennent annulairement autour du support 13, sous la plaque de façade 15, et, d'autre part, des moyens d'étanchéité 20, dits ici par simple commodité moyens d'étanchéité internes, qui interviennent annulairement autour de l'évidement 14 du support 13, sous le couvercle 16.

En pratique, le logement destiné à recevoir le support 13 est formé par une autre boîte, communément dite boîte d'encastrement, qui est disposée, elle, dans une excavation 21 ménagée à cet effet dans le sol 10.

Cette boîte d'encastrement étant bien connue par elle-même, et ne relevant pas en propre de la présente invention, elle n'a pas été représentée sur les figures et elle ne sera pas décrite ici.

De même, l'appareillage 11 ne relève pas de la présente invention, et il ne sera donc pas non plus décrit ici.

Dans la forme de réalisation représentée, le support 13 comporte, globalement, un corps 22, qui définit l'évidement 14, et, à la partie supérieure de ce corps 22, un rebord 23, qui, faisant saillie radialement vers l'extérieur, s'étend transversalement par rapport à l'axe de l'évidement 14.

Le corps 22 comporte, lui-même, globalement, deux tronçons, à savoir un tronçon inférieur 22A, dont le contour en plan est globalement quadrangulaire, et par exemple carré, et un tronçon supérieur 22B, dont le contour en plan , élargi, est sensiblement supérieur à celui du tronçon inférieur 22A, et dont les zones d'angle sont largement abattues par des pans coupés, avec, à la jonction entre ces deux tronçons 22A , 22B, un épaulement 24 à la faveur duquel interviennent deux perçages 25, en trou de serrure, pour le passage de vis, non représentées, propre à la fixation de l'ensemble sur la boîte d'encastrement sous-jacente.

Le rebord 23 a, lui, périphériquement, un contour globalement circulaire.

Mais, au voisinage de l'évidement 14, il comporte en creux sur sa surface supérieure, un dégagement 26, qui, lui, a, en plan, un contour assez sembable à celui du tronçon supérieur 22B du corps 22, à savoir un contour globalement quadrangulaire, avec, cependant des zones d'angle largement arrondies par des arcs de cercle.

Dans la forme de réalisation représentée, la plaque de façade 15 a, à sa périphérie externe, un contour circulaire.

Mais sa périphérie interne a un contour globalement quadrangulaire du même type que celui du dégagement 26 que comporte le rebord 23 du support 13.

Par exemple, le support 13 est en matière synthétique, tandis que la plaque de façade 15 est en métal ou en un autre matériau.

Le couvercle 16 peut, lui aussi, être en métal ou en un autre matériau.

Il a, en plan, un contour, qui, au moins en partie, suit celui de la périphérie interne de la plaque de façade 15.

Suivant l'invention, les moyens d'étanchéité externes 19 et les moyens d'étanchéité internes 20 appartiennent d'un seul tenant à un même joint 28, qui, par ailleurs, forme par lui-même l'articulation 18 du couvercle 16.

Dans la forme de réalisation représentée, ce joint 28 comporte, d'une seule pièce, deux parties, à savoir, d'une part, une partie périphérique 28A, qui s'étend annulairement et comporte les moyens d'étanchéité externes 19, et, d'autre part, une partie centrale 28B, qui, rattachée localement à la partie périphérique 28A par une zone racine 29 englobant l'articulation 18 du couvercle 16, s'étend globalement diamétralement par rapport à cette partie périphérique 28A et comporte les moyens d'étanchéité internes 20.

De l'une à l'autre des extrémités de la zone racine 29 qui les relie, un évidement 30 s'étend en croissant entre la partie périphérique 28A du joint 28 et sa partie centrale 28B.

Autrement dit, exception faite de la zone racine 29, le contour externe de la partie centrale 28B s'étend en retrait par rapport au contour interne de la partie périphérique 28A.

En pratique, le contour externe de la partie périphérique 28A est globalement circulaire, à l'image de celui de la plaque de façade 15, tandis que le contour externe de la partie centrale 28B est globalement quadrangulaire, avec des zones d'angle largement arrondies par des arcs de cercle, à l'image, pour l' essentiel, de celui du couvercle 16.

Dans la forme de réalisation représentée, les moyens d'étanchéité externes 19 sont fermés par une lèvre que la partie périphérique 28A du joint 28 présente en saillie sur sa surface inférieure.

En pratique, cette lèvre est globalement tronconique, en s'évasant vers l'extérieur au fur et à mesure qu'elle s'éloigne de la surface inférieure du joint 28, et, en plan, elle a un contour globalement circulaire.

En pratique, également, le joint 28 comporte périphériquement un bord tombé 32 autour de la lèvre formant ainsi les moyens d'étanchéité externes 19, à distance de cette lèvre.

Corrolairement, dans la forme de réalisation représentée, les moyens d'étanchéité internes 20 sont formés par une lèvre que la partie centrale 28B du joint 28 présente en saillie sur sa surface inférieure.

Comme précédemment, cette lèvre est globalement tronconique, et va s'évasant vers l'extérieur au fur et à mesure qu'elle s'éloigne de la surface inférieure du joint 28, mais, destinée à porter sur le fond du dégagement 26 que présente en creux, à sa surface supérieure, le rebord 23 du support 13, elle a, en plan, un contour qui, à l'image de celui de ce dégagement 26, aussi bien que de celui du couvercle 16, est globalement quadrangulaire, avec des zones d'angle largement arrondies par des arcs de cercle.

Mais, nonobstant leur différence de contour, les deux lèvres constituant ainsi les moyens d'étanchéité externes 19 et internes 20 sont globalement concentriques l'une par rapport à l'autre.

Dans la forme de réalisation représentée, la tranche libre de la lèvre formant les moyens d'étanchéité internes 20 s'étend par ailleurs largement en retrait par rapport à celle de la lèvre formant les moyens d'étanchéité externes 19.

Dans la forme de réalisation représentée, la zone racine 29 par laquelle la partie centrale 28B du joint 28 se rattache à sa partie périphérique 28A s'étend de part et d'autre de l'articulation 18 du couvercle 16.

En pratique, cette articulation 18 est constituée par une portion de moindre épaisseur du joint 28.

Plus précisément, la portion de moindre épaisseur formant ainsi cette articulation 18 résulte de la présence d'une gorge 33 affectant en creux la surface inférieure de la zone racine 29.

Cette gorge 33, qui s'étend de manière rectiligne, suivant sensiblement une corde du joint 28, a dans la forme de réalisation représentée, une section transversale en V.

Dans la forme de réalisation représentée, la zone racine 29 forme, localement, en saillie sur la surface supérieure du joint 28, un bossage 34, dont l'épaisseur est largement supérieure à celle de la partie courante du joint 28, et à la faveur duquel est précisément formée la gorge 33.

Dans la forme de réalisation représentée, ce bossage 34 s'étend, en surface, entre le couvercle 16 et la plaque de façade 15, en sorte que, localement, le contour du couvercle 16 se trouve tronqué par rapport à celui de la partie centrale 28B du joint 28.

En pratique, la surface supérieure du bossage 34, qui est sensiblement plane, s'étend sensiblement à niveau avec celle de la plaque de façade 15 et celle du couvercle 16, et, dans la forme de réalisation représentée, elle comporte, en creux, des stries 35 parallèles à l'articulation 18 du couvercle 16.

En pratique, le couvercle 16 se réduit à une simple plaquette sensiblement plane, ou légèrement bombée, et la partie centrale 28B du joint 28 présente, en creux, sur sa surface supérieure, un dégagement 37, dans lequel ce couvercle 16 est au moins en partie encastré.

Dans la forme de réalisation représentée, ce dégagement 37 s'étend sur la quasi totalité de la surface supérieure de la partie centrale 28B du joint 28, en laissant subsister en saillie à sa périphérie, un rebord 38, qui, en surface, s'étend entre le couvercle 16 et la plaque de façade 15, en allant en continu de l'une à l'autre des extrémités du bossage 34 que forme la zone racine 29, et le couvercle 16 y est totalement encastré.

En pratique, le couvercle 16 est solidarisé à la partie centrale 28B du joint 28, par collage sur le fond du dégagement 37 dans lequel il est encastré.

Dans la forme de réalisation représentée, et suivant l'invention, il est prévu que le maintien en position rabattue de fermeture du couvercle 16 se fasse de manière magnétique.

Par exemple, et tel que représenté, la partie centrale 28B du joint 28, forme, localement, pour ce faire, en creux sur sa surface supérieure, un logement 39, qui est recouvert par le couvercle 16, et dans lequel est disposé une pièce 40 en acier doux, et, en correspondance, et tel que schématisé en traits interrompus sur la figure 2, le support 13 porte au moins un aimant 41.

En pratique, la pièce 40 est allongée en forme de barrette, et elle s'étend suivant une corde du joint 28, parallèlement à l'articulation 18 du couvercle 16, du côté de celui-ci opposé à cette articulation 18.

Le logement 39 est ouvert à chacune de ses extrémités, et la pièce 40 en déborde à l'une et l'autre de celles-ci.

Corrolairement, le support 13 porte, en correspondance avec les extrémités ainsi dégagées de la pièce 40, deux aimants 41.

Dans la forme de réalisation représentée, le support 13 comporte, pour ce faire, deux logements 42, qui sont ménagés dans deux zones d'angle adjacentes du tronçon 22B supérieur de son corps 22, et qui débouchent en surface à niveau avec le fond du dégagement 26 du rebord 23.

Le maintien de la pièce 40 dans son logement 39 se trouve assuré par le couvercle 16, du fait même du collage de celui-ci.

Dans la forme de réalisation représentée, et suivant l'invention, il est prévu que la plaque de façade 15 soit dès l'origine assujettie en atelier au support 13, avec un pincement du joint 28 entre cette plaque de façade 15 et ce support 13 au niveau de la partie périphérique 28A de ce joint 28.

Pour ce faire, la plaque de façade 15 présente, en saillie sur sa surface inférieure, le long de deux bords opposés de sa périphérie interne, des plots 44, figure 3, par exemple à raison de deux plots 44 pour chacun de ces bords, et, en correspondance, le support 13, comporte, localement, des douilles 45, qui débouchent en surface sur son rebord 23, et qui, au montage, sont serties sur les plots 44 de la plaque de façade 15, par exemple par un traitement aux ultrasons.

Pour assurer, lors de ce montage, un positionnement correct du joint 28 par rapport au support 13, et ainsi éviter que ce joint 28 ne vienne intempestivement bailler, il est prévu, localement, entre la partie périphérique 28A du joint 28 et le support 13, et, plus précisément, le rebord 23 de ce support 13, des moyens d'engagement.

Pour ce faire, le support 13, présente, à sa périphérie, à la faveur de son rebord 23, au moins une patte 46 sous laquelle passe la portion correspondante de la partie périphérique 28A du joint 28.

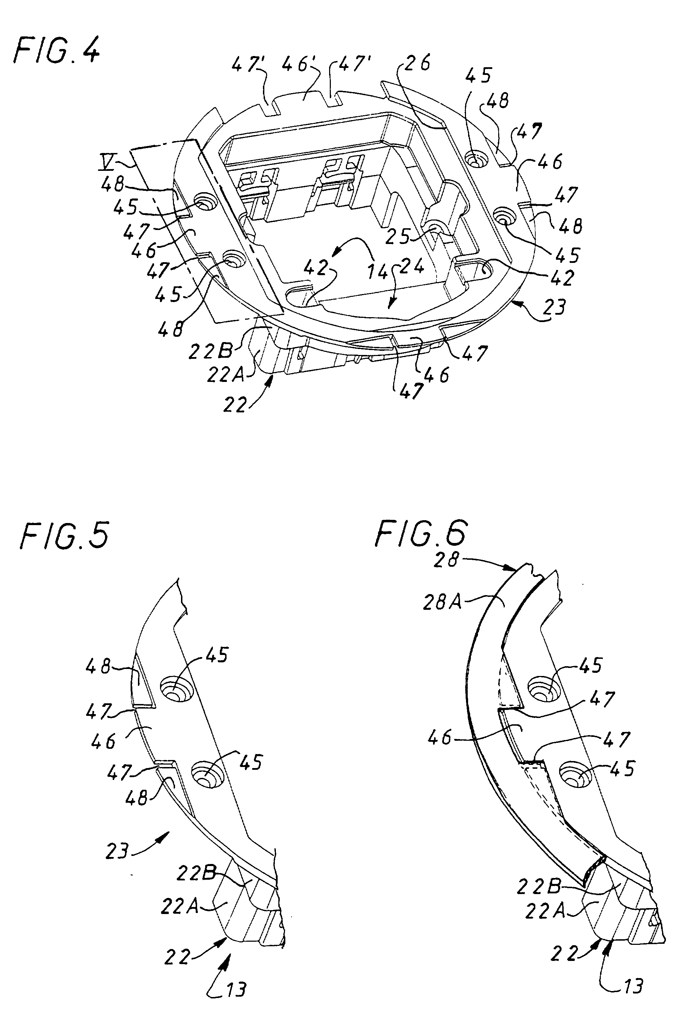

Dans la forme de réalisation représentée, trois pattes 46 sont prévues, figures 3 et 4, l'une en position diamétralement opposée à l'articulation 18 du couvercle 16, et les deux autres à 90° par rapport à la précédente.

Toutes ces pattes 46 s'étendent à niveau avec la surface supérieure du rebord 23 du support 13, et elles sont chacune délimitées par deux fentes 47 de ce rebord 23 au-delà desquelles celui-ci présente des dégagements 48 en creux sur sa surface supérieure.

En correspondance, la partie périphérique 28A du joint 28 présente, en creux sur sa surface supérieure, des dégagements 50 lui permettant d'être localement engagée sous ces pattes 46 à la faveur des fentes 47 flanquant celles-ci.

Dans la forme de réalisation représentée, le joint 28 présente, en outre, en saillie sur sa surface inférieure, du côté de l'articulation 18 du couvercle 16, entre cette articulation et la lèvre formant les moyens d'étanchéité externes 19, une bride 51 avec laquelle le support 13 est en prise par une patte 46' qui, formée elle aussi à la faveur de son rebord 23, en étant délimitée latéralement par deux fentes 47', s'étend, elle, à niveau avec le fond du dégagement 26 de son rebord 23.

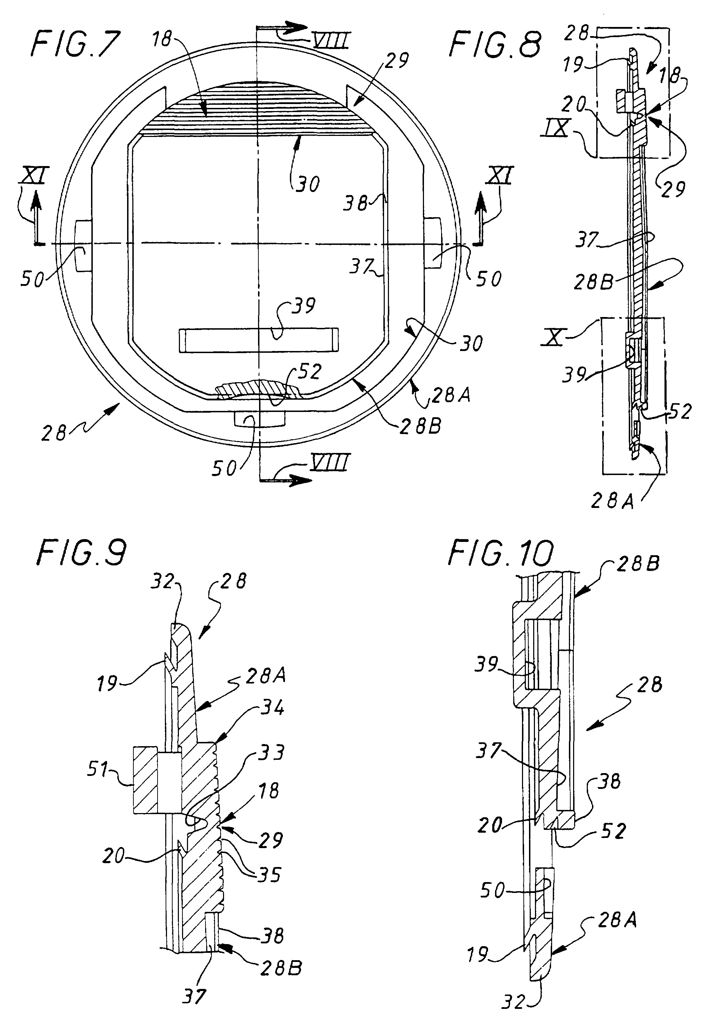

Dans la forme de réalisation représentée, enfin, pour faciliter la préhension du couvercle 16 nécessaire pour son passage de sa position rabattue de fermeture à sa position relevée d'ouverture, il est prévu, en creux sur la surface extérieure du rebord 38 de la partie centrale 28B du joint 28, du côté de ce rebord 38 opposé à l'articulation 18 du couvercle 16, une encoche 52, figures 7, 8 et 10.

Il résulte par ailleurs de ce qui précède que, dès l'origine, la boîte de sol 12 suivant l'invention forme un ensemble unitaire, ce qui en facilite la manipulation et la mise en place.

Lors de cette mise en place, la lèvre du joint 28 formant les moyens d'étanchéité externes 19 vient s'appliquer contre le sol 10, autour de l'excavation 21 de celui-ci, sous l'action des vis assurant la fixation de l'ensemble à la boîte d'encastrement présente dans cette excavation 21.

Bien entendu, la présente invention ne se limite pas à la forme de réalisation décrite et représentée mais englobe toute variante d'exécution.

En particulier, pour le maintien du couvercle en position rabattue de fermeture, le support peut être métallique et le joint comporter alors une charge aimantée.

En outre, le contour de la périphérie externe de la plaque de façade n'est pas nécessairement circulaire, et, est, en pratique indifférent.

Il peut par exemple, être notamment globalement quadrangulaire, et, carré, si désiré.

Enfin, au lieu d'être encastrée dans un sol, comme plus particulièrement décrit et représenté, la boîte "de sol" suivant l'invention peut tout aussi bien être encastrée dans un autre support, et, par exemple, dans une cloison.

## Revendications

1. Boîte de sol du genre comportant un support (13), qui, destiné à être disposé dans un logement prévu à cet effet dans le sol ou une cloison par exemple, comporte, pour la réception d'un quelconque appareillage (11), un évidement (14), une plaque de façade (15), qui, destinée à porter sur le sol, s'étend annulairement autour de l'évidement (14) du support (13), et un couvercle (16), qui, monté pivotant par une articulation (18), est apte à fermer cet évidement (14), avec, d'une part, des moyens d'étanchéité (19), dits moyens d'étanchéité externes, qui interviennent annulairement autour du support (13), sous la plaque de façade (15), et, d'autre part, des moyens d'étanchéité (20), dits moyens d'étanchéité internes, qui interviennent annulairement autour de l'évidement (14) du support (13), sous le couvercle (16), les moyens d'étanchéité externes (19) et les moyens d'étanchéité internes (20) appartennant d'un seul tenant à un même joint (28), **caractérisée en ce que** le joint (28) forme, par ailleurs, par lui-même, l'articulation (18) du couvercle (16).

2. Boîte de sol suivant la revendication 1, **caractérisée en ce que** le joint (28) comporte d'une seule pièce deux parties, à savoir, d'une part, une partie périphérique (28A), qui s'étend annulairement et comporte les moyens d'étanchéité externes (19), et, d'autre part, une partie centrale (28B), qui, rattachée localement à la partie périphérique (28A) par une zone racine (29) englobant l'articulation (18) du couvercle (16), s'étend globalement diamétralement par rapport à la partie périphérique (28A) et comporte les moyens d'étanchéité internes (20).

3. Boîte de sol suivant la revendication 2, **caractérisé en ce que**, de l'une à l'autre des extrémités de la zone racine (29) qui les relie, un évidement (30) s'étend en croissant entre la partie périphérique (28A) du joint (28) et sa partie centrale (28B).

4. Boîte de sol suivant l'une quelconque des revendications 2, 3, **caractérisée en ce que** les moyens d'étanchéité externes (19) sont formés par une lèvre que la partie périphérique (28A) du joint (28) présente en saillie sur sa surface inférieure.

5. Boîte de sol suivant la revendication 4, **caractérisée en ce que** le joint (28) comporte périphériquement un bord tombé (32) autour de la lèvre formant les moyens d'étanchéité externes (19).

6. Boîte de sol suivant l'une quelconque des revendications 2 à 5, **caractérisée en ce qu'**il est prévu, au moins localement, entre la partie périphérique (28A) du joint (28) et le support (13), des moyens d'engagement.

7. Boîte de sol suivant la revendication 6, **caractérisée en ce que**, pour la constitution de moyens d'engagement, le support (13) présente au moins une patte (46) sous laquelle passe la partie périphérique (28A) du joint (28).

8. Boîte de sol suivant l'une quelconque des revendications 6, 7, **caractérisée en ce que**, pour la constitution de moyens d'engagement, le joint (28) présente en saillie sur sa surface inférieure, une bride (51) avec laquelle le support (13) est en prise par une patte (46').

9. Boîte de sol suivant l'une quelconque des revendications 2 à 8, **caractérisée en ce que** les moyens d'étanchéité internes (20) sont formés par une lèvre que la partie centrale (28B) du joint (28) présente en saillie sur sa surface inférieure.

10. Boîte de sol suivant l'une quelconque des revendications 2 à 9, **caractérisée en ce que** la partie centrale (28B) du joint (28) forme, localement, en creux sur sa surface supérieure, un logement (39), qui est recouvert par le couvercle (16), et dans lequel est disposée une pièce (40) en acier doux, et, en correspondance, le support (13) porte au moins un aimant (41).

11. Boîte de sol suivant l'une quelconque des revendications 2 à 10, **caractérisée en ce que** la partie centrale (28B) du joint (28) présente, en creux, sur sa surface supérieure, un dégagement (37) dans lequel le couvercle (16) est au moins partiellement encastré.

12. Boîte de sol suivant la revendication 11, **caractérisée en ce que** le dégagement (37) de la partie centrale (28B) du joint (28) s'étend sur la quasi totalité de la surface supérieure de cette partie centrale (28B), tout en laissant subsister en saillie, à sa périphérie, un rebord (38), qui, en façade, s'étend entre le couvercle (16) et la plaque de façade (15).

13. Boîte de sol suivant l'une quelconque des revendications 2 à 11, **caractérisée en ce que** la zone racine (29) par laquelle la partie centrale (28B) du joint (28) se rattache à sa partie périphérique (28A), s'étend de part et d'autre de l'articulation (18) du couvercle (16).

14. Boîte de sol suivant la revendication 13, **caractérisée en ce que** la zone racine (29) par laquelle la partie centrale (28B) du joint (28) se rattache à sa partie périphérique (28A) forme, localement, en saillie sur sa surface supérieure, un bossage (34), qui, en façade, s'étend entre le couvercle (16) et la plaque de façade (15).

15. Boîte de sol suivant l'une quelconque des revendications 1 à 14, **caractérisée en ce que** l'articulation (18) du couvercle (16) est constituée par une portion de moindre épaisseur du joint (28).

16. Boîte de sol suivant les revendications 2 et 15, prises conjointement, **caractérisée en ce que** la portion de moindre épaisseur du joint (28) formant l'articulation (18) du couvercle (16) résulte de la présence d'une gorge (33) affectant en creux la surface inférieure de la zone racine (29) par laquelle la partie centrale (28B) de ce joint (28) se rattache à sa partie périphérique (28A).

17. Boîte de sol suivant l'une quelconque des revendications 1 à 16, **caractérisée en ce que** le couvercle (16) se réduit à une simple plaquette.

18. Boîte de sol suivant l'une quelconque des revendications 1 à 17, **caractérisée en ce que** la plaque de façade (15) est assujettie au support (13) avec un pincement du joint (28).

## Patentansprüche

1. Bodendose, die einen Halter (13), der dazu bestimmt ist, in einer zu diesem Zweck beispielsweise im Boden oder in einer Wand vorgesehenen Aufnahme angeordnet zu werden, und zur Aufnahme eines beliebigen Geräts (11) eine Aussparung (14) aufweist, eine Frontplatte (15), die dazu bestimmt ist, auf dem Boden aufzuliegen, und sich ringförmig um die Aussparung (14) des Halters (13) herum erstreckt, und einen Deckel (16) besitzt, der über ein Gelenk (18) schwenkbar montiert ist und diese Aussparung (14) schließen kann, mit einerseits Dichtungsmitteln (19), äußere Dichtungsmittel genannt, die ringförmig um den Halter (13) herum unter der Frontplatte (15) angeordnet sind, und andererseits Dichtungsmitteln (20), innere Dichtungsmittel genannt, die ringförmig um die Aussparung (14) des Halters (13) herum unter dem Deckel (16) angeordnet sind, wobei die äußeren Dichtungsmittel (19) und die inneren Dichtungsmittel (20) einstückig zu einer gemeinsamen Dichtung (28) gehören, **dadurch gekennzeichnet, dass** die Dichtung (28) außerdem durch sich selbst das Gelenk (18) des Deckels (16) bildet.

2. Bodendose nach Anspruch 1, **dadurch gekennzeichnet, dass** die Dichtung (28) einstückig zwei Teile aufweist, und zwar einerseits einen Umfangsteil (28A), der sich ringförmig erstreckt und die äußeren Dichtungsmittel (19) umfasst, und andererseits einen Mittelteil (28B), der örtlich am Umfangsteil (28A) durch einen Wurzelbereich (29) befestigt ist, der das Gelenk (18) des Deckels (16) umfasst, und sich insgesamt diametral bezüglich des Umfangsteils (28A) erstreckt und die inneren Dichtungsmittel (20) umfasst.

3. Bodendose nach Anspruch 2, **dadurch gekennzeichnet, dass** eine Aussparung (30) sich von einem der Enden des Wurzelbereichs (29), der diese Teile verbindet, wachsend zwischen dem Umfangsteil (28A) der Dichtung (28) und ihrem Mittelteil (28B) erstreckt.

4. Bodendose nach einem der Ansprüche 2, 3, **dadurch gekennzeichnet, dass** die äußeren Dichtungsmittel (19) von einer Lippe gebildet sind, die der Umfangsteil (28A) der Dichtung (28) auf seiner Unterseite vorstehend aufweist.

5. Bodendose nach Anspruch 4, **dadurch gekennzeichnet, dass** die Dichtung (28) entlang dem Umfang um die die äußeren Dichtungsmittel (19) bildende Lippe herum einen abgewinkelten Rand (32) aufweist.

6. Bodendose nach einem der Ansprüche 2 bis 5, **dadurch gekennzeichnet, dass** zwischen dem Umfangsteil (28A) der Dichtung (28) und dem Halter (13) mindestens örtlich Einsteckmittel vorgesehen sind.

7. Bodendose nach Anspruch 6, **dadurch gekennzeichnet, dass** der Halter (13) zur Bildung von Einsteckmitteln mindestens einen Lappen (46) aufweist, unter den der Umfangsteil (28A) der Dichtung (28) tritt.

8. Bodendose nach einem der Ansprüche 6, 7, **dadurch gekennzeichnet, dass** die Dichtung (28) zur Bildung von Einsteckmitteln auf ihrer Unterseite vorstehend eine Lasche (51) aufweist, mit der der Halter (13) über einen Lappen (46') in Eingriff steht.

9. Bodendose nach einem der Ansprüche 2 bis 8, **dadurch gekennzeichnet, dass** die inneren Dichtungsmittel (20) von einer Lippe gebildet sind, die der Mittelteil (28B) der Dichtung (28) auf seiner Unterseite vorstehend aufweist.

10. Bodendose nach einem der Ansprüche 2 bis 9, **dadurch gekennzeichnet, dass** der Mittelteil (28B) der Dichtung (28) örtlich auf seiner Oberseite vertieft eine Aufnahme (39) bildet, die durch den Deckel (16) bedeckt ist und in der ein Teil (40) aus Weichstahl angeordnet ist, und der Halter (13) in Entsprechung mindestens einen Magnet (41) trägt.

11. Bodendose nach einem der Ansprüche 2 bis 10, **dadurch gekennzeichnet, dass** der Mittelteil (28B) der Dichtung (28) auf seiner Oberseite vertieft eine Ausnehmung (37) aufweist, in die der Deckel (16) mindestens teilweise eingelassen ist.

12. Bodendose nach Anspruch 11, **dadurch gekennzeichnet, dass** die Ausnehmung (37) des Mittelteils (28B) der Dichtung (28) sich fast über die gesamte Oberfläche dieses Mittelteils (28B) erstreckt, indem sie an ihrem Umfang vorstehend eine Randleiste (38) bestehen lässt, die sich frontseitig zwischen dem Deckel (16) und der Frontplatte (15) erstreckt.

13. Bodendose nach einem der Ansprüche 2 bis 11, **dadurch gekennzeichnet, dass** der Wurzelbereich (29), über den der Mittelteil (28B) der Dichtung (28) an ihrem Umfangsteil (28A) befestigt ist, sich zu beiden Seiten des Gelenks (18) des Deckels (16) erstreckt.

14. Bodendose nach Anspruch 13, **dadurch gekennzeichnet, dass** der Wurzelbereich (29), über den der Mittelteil (28B) der Dichtung (28) an ihrem Umfangsteil (28A) befestigt ist, örtlich auf ihrer Oberseite vorstehend eine Erhebung (34) bildet, die sich frontseitig zwischen dem Deckel (16) und der Frontplatte (15) erstreckt.

15. Bodendose nach einem der Ansprüche 1 bis 14, **dadurch gekennzeichnet, dass** das Gelenk (18) des Deckels (16) von einem Teil geringerer Dicke der Dichtung (28) gebildet ist.

16. Bodendose nach den Ansprüchen 2 und 15 zusammen, **dadurch gekennzeichnet, dass** der das Gelenk (18) des Deckels (16) bildende Teil geringerer Dicke der Dichtung (28) sich aus dem Vorhandensein einer Nut (33) ergibt, die auf der Unterseite des Wurzelbereichs (29), über den der Mittelteil (28B) der Dichtung (28) an ihrem Umfangsteil (28A) befestigt ist, ausgespart ist.

17. Bodendose nach einem der Ansprüche 1 bis 16, **dadurch gekennzeichnet, dass** der Deckel (16) auf eine einfache Platte reduziert ist.

18. Bodendose nach einem der Ansprüche 1 bis 17, **dadurch gekennzeichnet, dass** die Frontplatte (15) an dem Halter (13) unter Einklemmung der Dichtung (28) angebracht ist.

## Claims

1. A floor socket of the type comprising a support (13) for location in a cavity provided in the ground or a wall, for example, comprising a recess (14) for receiving an appliance (11), a cover plate (15) which is intended to bear on the ground and which extends in an annular manner around the recess (14) of support (13), and a cover (16) which is pivotally mounted via a hinge (18) and can close said recess (14), with sealing means (19), termed the external sealing means, disposed in an annular manner around the support (13) beneath the cover plate (15), and with sealing means (20), termed the internal sealing means, disposed in an annular manner around the recess (14) of support (13) beneath the cover (16), the external sealing means (19) and the internal sealing means (20) forming an integral part of a single gasket (28), **characterized in that** said gasket (28) also itself forms the hinge (18) of cover (16).

2. A floor socket according to claim 1, **characterized in that** the single piece of the gasket (28) comprises two portions, a peripheral portion (28A) which extends in an annular manner and comprises the external sealing means (19), and a central portion (28B) which is locally attached to the peripheral portion (28A) via a root zone (29) surrounding hinge (28) of the cover (16), which extends substantially diametrically with respect to the peripheral portion (28A) and comprises the internal sealing means (20).

3. A floor socket according to claim 2, **characterized in that** a recess (30) extends in a crescent shape between the peripheral portion (28A) of gasket (28) and its central portion (28B) either side of the ends of the root zone (29) connecting them.

4. A floor socket according to claim 2 or claim 3, **characterized in that** the external sealing means (19) is formed by a lip that projects from the lower surface of the peripheral portion (28A) of the gasket (28).

5. A floor socket according to claim 4, **characterized in that** the gasket (28) comprises a peripheral cutoff edge (32) around the lip forming the external sealing means (19).

6. A floor socket according to any one of claims 2 to 5, **characterized in that** engaging means are provided at least locally between the peripheral portion (28A) of gasket (28) and the support (13).

7. A floor socket according to claim 6, **characterized in that** the engaging means is constituted by at least one tab (46) provided on the support (13) beneath which the peripheral portion (28A) of gasket (28) passes.

8. A floor socket according to claim 6 or claim 7, **characterized in that** the engaging means is constituted by a hasp (51) projecting below the lower surface of the gasket (28) with which the support is engaged via a tab (46').

9. A floor socket according to any one of claims 2 to 8, **characterized in that** the internal sealing means (20) is formed by a lip projecting below the lower surface of the central portion (28B) of the gasket (28).

10. A floor socket according to any one of claims 2 to 9, **characterized in that** the central portion (28B) of the gasket (28) exhibits a cavity (39) in the upper surface of said gasket, which cavity is covered by the cover (16) and in which a low carbon steel part (40) is located and which can correspond with a magnet (41) carried on the support (13).

11. A floor socket according to any one of claims 2 to 10, **characterized in that** the central portion (28B) of gasket (28) exhibits a depression (37) into which the cover (16) is at least partially embedded.

12. A floor socket according to claim 11, **characterized in that** the depression (37) of the central portion (28B) of the gasket (28) extends over substantially the entire upper surface of said central portion (28B) leaving a projecting edge (38) at its periphery which extends between the cover (16) and the cover plate (15) in plan view.

13. A floor socket according to any one of claims 2 to 11, **characterized in that** the root zone (29) via which the central portion (28B) of the gasket (28) is attached to its peripheral portion (28A) extends either side of the hinge (18) of the cover (16).

14. A floor socket according to claim 13, **characterized in that** the root zone (29) via which the central portion (28B) of the gasket (28) is attached to its peripheral portion (28A) locally forms a boss (34) which projects from the upper surface of the gasket and which extends between the cover (16) and the cover plate (15) in plan view.

15. A floor socket according to any one of claims 1 to 14, **characterized in that** hinge (18) of cover (16) is constituted by a portion of the gasket (28) of reduced thickness.

16. A floor socket according to any one of claims 2 to 15 taken together, **characterized in that** the portion of gasket (28) with reduced thickness forming the hinge (18) of cover (16) results from the presence of a groove (33) formed in the lower surface of the root zone (29) via which the central portion (28B) of said gasket (28) is attached to its peripheral portion (28A).

17. A floor socket according to any one of claims 1 to 16, **characterized in that** the cover (16) is a simple plate.

18. A floor socket according to any one of claims 1 to 17, **characterized in that** the cover plate (15) is affixed to the support (13) with compression of the gasket (28).
